# FASCICULE DE BREVET EUROPEEN

(11) **EP 2 822 709 B1**
(45) Date de publication et mention de la délivrance du brevet: **16.03.2016**
(21) Numéro de dépôt: 12816758.2
(22) Date de dépôt: 20.12.2012
(51) Int. Cl.: B07C 3/00

(54) **PROCÉDÉ DE SUIVI D'ENVOIS POSTAUX POUR MESURER DES TEMPS DE PARCOURS DANS UN SYSTÈME DE TRI POSTAL MULTI RÉSEAUX**
VERFAHREN ZUR SENDUNGSVERFOLGUNG ZUR BESTIMMUNG DER BEFÖRDERUNGSZEIT IN EINEM POSTALISCHEN SORTIERNETZWERK
METHOD OF TRACKING POSTAL ITEMS TO MEASURE THE TRAVEL TIME IN A POSTAL SORTING NETWORK

(30) Priorité: 09.03.2012 FR 1252141
(43) Date de publication de la demande: 14.01.2015
(73) Titulaire: Solystic, 92220 Bagneux (FR)
(72) Inventeur: MIETTE, Emmanuel, F-95210 Saint Gratien (FR)
(74) Mandataire: Prugneau, Philippe
(86) Numéro de dépôt international: PCT/FR2012/053031
(87) Numéro de publication internationale: WO 2013/132164

(56) Documents cités:
- US-A1- 2002 172 399
- US-A1- 2010 150 398
- US-A1- 2010 332 406
- US-B2- 7 991 704

## Description

### Domaine technique

Le domaine de l'invention est celui du tri automatique des envois postaux, les envois pouvant être des lettres, des magazines ou journaux mis sous enveloppe en plastique ou en papier, et de façon générale des objets plats de petit et grand format ou des colis.

L'invention concerne plus particulièrement un procédé pour suivre du courrier dans un système de tri postal en vue notamment de mesurer le temps de parcours du courrier dans le système de tri.

### Technique antérieure

Le suivi du courrier permet de mesurer la qualité de service des Postes. Un émetteur de courrier comme une Poste a besoin de connaître le temps réel d'acheminement et de suivre le courrier entre la remise du courrier au bureau de poste de départ et la distribution chez le destinataire par le facteur. Ce temps d'acheminement dépend du temps de traitement automatique du courrier dans les différentes machines de tri traversées par le courrier. Lorsqu'il s'agit de courrier international, il y a en plus un transfert du courrier d'une poste nationale à une autre poste nationale. Il existe aussi un besoin des Postes de mesurer leur qualité de service pour le courrier dit « international ». Il existe aussi des besoins de mesure du temps d'acheminement pour du courrier national qui transite en réalité par plusieurs Postes indépendantes qui ont leur propres systèmes de tri.

Une technique connue pour suivre et mesurer le temps de parcours du courrier consiste à utiliser une lettre test, c'est-à-dire une lettre spéciale équipée d'une puce RFID porteuse d'un identifiant unique. Des portiques sont placés à des points de passage clé de la lettre test dans le réseau de machines de tri, par exemple à l'entrée ou à la sortie de salles de tri. Chaque portique détecte le passage de la lettre test, qui se trouve le plus souvent dans un bac de manutention et remonte des données de suivi vers un serveur de données distant. Ces données indiquent typiquement le lieu de la détection et la date et l'heure de la détection. Le lieu de la détection peut être un identifiant de portique ou analogue. A partir d'un historique des données de suivi, on peut estimer le temps du parcours de la lettre test entre le moment où elle est mise à la Poste et le moment où elle est livrée chez le destinataire. Cette technique est compliquée et couteuse à mettre en oeuvre car elle nécessite des moyens matériels supplémentaire sur les installations de tri. En outre, elle ne permet pas de faire des mesures sur du courrier réel et en réalité peu de lettres test circulent chaque jour dans les installations de tri ce qui fait que les mesures ne sont pas très représentatives de la situation réelle.

Dans le document de brevet US 7,991,704, on décrit un procédé de suivi du courrier conçu pour du multi réseaux postaux, c'est-à-dire sur plusieurs réseaux différents de machines de tri appartenant à différentes Postes. Il s'agit ici de suivre les temps d'acheminement du courrier dit « international ». Dans ce contexte, chaque réseau de machines de tri a son propre protocole d'identification unique des envois et les différents protocoles sont généralement très différents et incompatibles entre eux. Pour palier cette situation, ce procédé connu prévoit une lettre spécifique sur laquelle sont apposés, par exemple sous la forme de différents codes à barres, les différents codes d'identification d'envoi générés avec les différents protocoles des réseaux de machines de tri considérés. Ces différents codes d'identification sont apposés sur la lettre avant son introduction dans les réseaux de machines de tri. Quand la lettre traverse un certain réseau de machines de tri, elle porte donc un code d'identification lisible et reconnaissable par les machines du réseau et des données de suivi peuvent donc être remontées sur un serveur de données en association avec ce code d'identification. Mais cette technologie a pour inconvénient d'avoir une lettre surchargée de codes d'identification ce qui est préjudiciable à un traitement automatique OCR pour la reconnaissance de l'adresse de distribution. Cette lettre risque donc d'être acheminée dans de mauvaises conditions à travers les différentes machines de tri des réseaux et donc les données de suivi remontées pour cette lettre ne sont pas forcément représentatives pour une mesure de qualité. D'autre part, cette technique est contraignante pour l'émetteur de la lettre spécifique car il doit connaître l'ensemble des codes d'identification unique d'envoi utilisés par les Postes qui vont acheminer cette lettre spécifique et imprimer ces codes sur cette lettre. Encore un autre inconvénient de cette technique connue de suivi du courrier est que la lettre spécifique portant plusieurs codes d'identification est facilement discernable par les opérateurs machine, lesquels volontairement ou non pourraient lui appliquer des traitements de tri spécifiques ce qui fausserait alors la mesure du temps de parcours.

### Exposé de l'invention

Le but de l'invention est de fournir un procédé de suivi du courrier qui ne présente pas tous ces inconvénients.

L'idée à la base de l'invention est d'utiliser du courrier réel pour tracer un historique du passage du courrier dans un réseau de machines de tri. Ensuite, si un envoi réel circule dans deux réseaux de machines de tri, l'idée est d'utiliser l'image de cet envoi réel pour faire le lien entre un identifiant d'envoi généré pour cet envoi par un premier réseau et un autre identifiant d'envoi généré pour le même envoi mais par l'autre réseau. Plus particulièrement, cette idée consiste à remonter une image de l'envoi associée au premier identifiant quand l'envoi est dans le premier réseau et une autre image de l'envoi associée au second identifiant quand l'envoi est dans le second réseau et à faire le lien entre les deux identifiants par détection d'une concordance entre ces deux images du même envoi.

Plus particulièrement, l'invention a pour objet un procédé pour suivre du courrier dans un système de tri postal comprenant un premier réseau de machines de tri avec un premier protocole d'identification unique des envois en machine et un second réseau de machines de tri avec un second protocole d'identification unique des envois en machine, procédé dans lequel le premier réseau produit des premières données de suivi datées au fur et à mesure qu'un certain envoi est acheminé à travers les machines de tri du premier réseau, ces premières données datées étant associées à un premier identifiant unique d'envoi généré selon le premier protocole, le second réseau produit des secondes données de suivi datées au fur et à mesure que ledit certain envoi est acheminé à travers les machines de tri du second réseau, ces secondes données datées étant associées à un second identifiant unique d'envoi généré selon le second protocole, caractérisé en ce qu'on récupère dans une unité de traitement de données lesdites données datées associées auxdits premier et second identifiants uniques d'envoi aux fins de mesurer une caractéristique temporelle du parcours dudit certain envoi dans les premier et second réseaux du système, et en ce que on établit dans l'unité de traitement de données une correspondance entre lesdits premier et second identifiants uniques d'envoi par l'intermédiaire d'images numériques dudit certain envoi.

Ce procédé est destiné à être mis en oeuvre par un fournisseur de services. L'unité de traitement de données peut être un serveur de données et d'images du fournisseur de service qui est connecté à travers un réseau de communication aux réseaux de machines de tri des Postes. Le réseau de communication peut être un réseau internet ou analogue.

Avec le procédé selon l'invention, chaque Poste peut avoir son propre serveur de données pour stocker des données de suivi d'envoi et dans ce cas le serveur de données et d'images du fournisseur de services est connecté aux serveurs de données de suivi des Postes pour récupérer les données de suivi. Avec le procédé selon l'invention, le fournisseur de services peut aussi être une Poste. On peut aussi utiliser comme identifiant unique d'envoi dans un des réseaux où rentre en premier un envoi suivi, un identifiant du type « lettre suivie » et/ou de type « ID-tag ». Le procédé selon l'invention est aussi compatible avec un protocole d'identification unique des envois sans impression du code d'identification sur les envois, par exemple une identification d'envoi par signature d'image. Un tel mécanisme d'identification unique d'envois sans impression est décrit dans le brevet EP 1 519 796 et est basé sur une signature d'image numérique à deux composantes, l'une des composantes étant représentative des caractéristiques physiques de l'image (taille, pixels, etc...) et l'autre composante étant au moins une description textuelle du bloc d'adresse destinataire apparaissant dans l'image.

Selon une particularité du procédé selon l'invention, dans l'unité de traitement de données, on récupère du premier réseau une première image de l'envoi associée au premier identifiant unique d'envoi, on récupère du second réseau une seconde image de cet envoi associée au second identifiant unique d'envoi, on détecte que la première image concorde graphiquement avec la seconde image pour établir ladite correspondance entre lesdits premier et second identifiants uniques d'envoi et à partir de cette mise en correspondance on consolide en mémoire lesdites premières données de suivi datées qui sont produites par le premier réseau avec les secondes données de suivi datées qui sont produites par le second réseau.

Selon une autre particularité du procédé selon l'invention, ladite première image associée audit certain envoi est récupérée lors de la dernière passe de tri dudit envoi dans le premier réseau et ladite seconde image associée audit certain envoi est récupérée lors de la première passe de tri dudit certain envoi dans le second réseau.

Selon encore d'autres particularités du procédé selon l'invention :
- on dérive des deux images de l'envoi respectivement une première et une seconde signature d'image, chaque signature d'image comprenant une composante représentative de caractéristiques physiques de l'image et une seconde composante qui est une description textuelle du bloc d'adresse de destinataire, et on compare les composantes de la première signature d'image avec les composantes de la seconde signature d'image pour détecter une concordance graphique entre les deux images de l'envoi ;
- la première image et la seconde image dudit certain envoi sont récupérées chacune avec un identifiant de réseau récepteur de l'envoi ;
- l'identifiant de réseau récepteur est associé dans un plan de tri à une sortie de tri d'une machine de tri du premier réseau.

### Présentation sommaire des dessins

Le procédé selon l'invention sera encore mieux compris à la lecture d'un exemple de mise en oeuvre détaillé ci-après et illustré sur les figures dans lesquelles :
- la figure 1 illustre de façon très schématique le procédé selon l'invention dans un système de tri postal avec deux réseaux de machines de tri postal ;
- la figure 2 illustre plus particulièrement la mise en concordance de deux images d'un envoi pour consolider des données de suivi associées à cet envoi ;
- la figure 3 illustre le procédé de suivi d'un envoi dans le premier réseau de machines de tri ;
- la figure 4 illustre le procédé de suivi d'un envoi dans le second réseau de machines de tri.

### Description d'un mode de réalisation

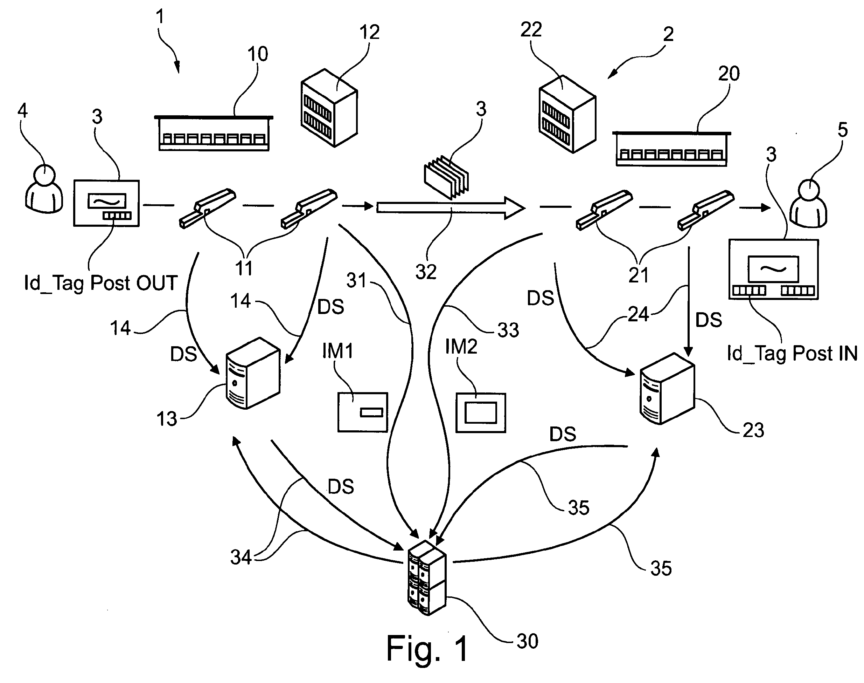

Sur la figure 1, on a représenté un système de tri postal qui comprend ici deux réseaux de machines de tri postales faisant partie de deux Postes, par exemple deux Postes nationales respectivement 1 et 2, ayant chacune ses propres centres de tri respectivement 10 et 20 avec des machines de tri postal respectivement 11 et 21 et son propre protocole d'identification unique des envois dans les machines de tri 11, 21, par exemple sous la forme d'un code barres apposé sur les envois.

Dans l'exemple, on considère des envois 3 postés par un émetteur (ou plusieurs émetteurs) dans un (ou plusieurs) bureau de la Poste 1, qui transitent d'une Poste à l'autre et donc d'un bureau d'échange en sortie 12 de la Poste 1 vers un bureau d'échange en entrée 22 de la Poste 2 pour être distribués à un (ou plusieurs) destinataire 5.

Le procédé de suivi de courrier selon l'invention exploite des envois 3 réels. Ces envois 3 réels sont suivis tout au long de leur parcours dans les machines de tri 11, 21 des deux Postes 1, 2 à l'aide des protocoles d'identification unique des envois mis en oeuvre dans les Postes 1 et 2 respectivement.

La mise en oeuvre du procédé selon l'invention sera décrite ci-après avec un seul envoi 3 réel. Un envoi 3 réel est donc posté bans une boîte à lettre de la Poste 1 et est trié dans les machines de tri 11 de la Poste 1. Au premier passage de l'envoi 3 dans une première machine de tri 11, un identifiant unique d'envoi est généré en machine selon le protocole d'identification de la Poste 1 et est par exemple apposé sur une face de l'envoi sous la forme d'un premier code barres « IdTag Post Out » lisible par les machines de tri 11 comme cela est bien connu. L'adresse de livraison de l'envoi 3 est reconnue par OCR à partir de l'image de l'envoi 3 comme cela est connu. Dans le réseau 1 de machines de tri 11, l'envoi 3 peut subir plusieurs passes de tri dans une même machine de tri 11 ou dans plusieurs machines de tri 11 différentes.

Les machines de tri 11 sont paramétrées pour réaliser un suivi de l'envoi 3, c'est-à-dire remonter des données de suivi datées DS (du type données de localisation machine et données temporelles date - heure) vers un système de suivi d'envois représenté par le serveur de données de suivi 13 ici propre à la Poste 1. On considère donc qu'à chaque fois que l'envoi 3 muni de son identifiant unique d'envoi « Id-tag Post Out » est détecté en entrée d'une machine de tri telle que 11, (par exemple par un lecteur de code barres) une donnée de suivi datées DS propre à cet envoi 3 est envoyée par la machine de tri 11 considérée au serveur de données de suivi 13 et au fur et à mesure que l'envoi 3 chemine dans les différentes machines de tri 11, une succession de telles données de suivi datées DS sont donc produites et transmises au serveur de données de suivi 13.

Les transmissions successives de ces données de suivi datées DS dans le réseau de machines de tri postal 11 de la Poste 1 sont symbolisées par les flèches 14 sur la figure 1.

Les données de suivi datées DS reçues par le système de suivi 13 sont archivées sous la forme d'un historique, chaque donnée de suivi datée DS transmise par une machine de tri telle que 11 étant typiquement constituée par exemple d'un triplet (Id-Tag Post Out - identifiant machine de tri 11 - date et heure du passage dans la machine de tri 11).

Quand l'envoi 3 arrive en bout de cycle de tri dans le premier réseau 1 de machines de tri postal 11, il est détecté dans une dernière machine de tri 11 du cycle de tri installée dans le bureau d'échange 12 et cette machine de tri 11 transmet au serveur de données de suivi 13 une dernière donnée de suivi datée DS comme indiqué plus haut.

Selon l'invention, une image numérique IM1 de cet envoi 3 comportant le bloc d'adresse destinataire est également transmise en association avec l'identifiant unique d'envoi Id-tag Post Out de l'envoi 3 depuis le bureau d'échange 12 (la dernière machine de tri 11 en bout de cycle de tri dans le réseau 1) vers un serveur de données et d'images 30 qui fait office d'unité de traitement de données et archive temporairement ces informations en mémoire.

La transmission de l'image IM1 de l'envoi 3 vers le serveur de données et d'images 30 est symbolisée par la flèche 31. Le serveur de données et d'images 30 peut être considéré comme un intégrateur de suivi d'envois extérieur aux réseaux postaux 1 et 2. Il faut comprendre qu'il s'agit d'une unité de stockage et de traitement de données sous la forme d'un ordinateur ou d'un réseau d'ordinateurs.

Ces opérations de suivi d'envoi peuvent être généralisées sur tout un ensemble d'envois 3 réels transitant (comme illustré par la flèche 32) entre le réseau postal 1 et le réseau postal 2, notamment dans le cadre d'une campagne de mesures.

L'envoi 3 se trouve maintenant dans une machine de tri 21 du bureau d'échange 22 de la Poste 2. Dans cette machine de tri 21, une image numérique de l'envoi 3 est de nouveau formée, cette image comportant le bloc d'adresse de livraison de l'envoi, et un second identifiant unique d'envoi pour cet envoi 3 est généré en machine selon le protocole d'identification unique des envois 3 propre au réseau 2, et est par exemple apposé sur une face de l'envoi 3 sous la forme d'un second code barre « IdTagPost In » lisible par les machines de tri 21 comme cela est bien connu.

Selon l'invention, la machine de tri 21 transmet cette image numérique IM2 de l'envoi 3 associée au second identifiant unique d'envoi « IdTagPost In » au serveur de données et d'images 30, lequel stocke temporairement en mémoire ces informations. La transmission d'images IM2 au serveur de données et d'images 30 est symbolisée sur la figure 1 par la flèche 33.

En parallèle à cette transmission d'images 33, la machine de tri 21 dans le bureau d'échange 22 transmet aussi des données de suivi datées DS vers par exemple un serveur de données de suivi 23 propre au réseau postal 2 comme illustré par la flèche 24. Ces données de suivi datées DS peuvent se présenter aussi sous la forme d'un triplet (Id-Tag Post In - identifiant machine de tri 21 - date et heure du passage dans la machine de tri 21).

L'envoi 3 poursuit ensuite son cheminement à travers les machines de tri 21 du réseau postal 2 jusqu'à un stade final du tri pour une distribution par le facteur et on comprend que des données de suivi datées DS produites successivement pour cet envoi 3 sont transmises successivement au serveur de données de suivi 23 au fur et à mesure du passage de cet envoi 3 dans les différentes machines de tri 21 comme illustré par les flèches 24.

Selon l'invention, dans le serveur de données et d'images 30, à un moment donné, par exemple quand est reçue par le serveur de données et d'images 30 l'image d'envoi IM2 provenant d'un centre d'échange 22 qui correspond à un envoi 3 entrant dans ce centre d'échange 22 et en provenance d'un autre centre d'échange 12, l'image d'envoi IM2 provenant du centre d'échange 22 est comparée avec les images d'envoi IM1 reçues du centre d'échange 12 pour différents envois de façon à détecter une concordance graphique entre l'image IM1 de l'envoi 3 prise dans le réseau postal 1 et l'image IM2 du même envoi 3 prise dans le réseau postal 2 de façon à associer le premier code d'identification « id-Tag Post Out » avec le second code d'identification « id-Tag Post In » affectés respectivement à l'envoi 3 par l'un et l'autre réseau postal 1, 2.

En réponse à cette détection de concordance, le serveur de données et d'images 30 est apte à récupérer (flèches 34) auprès du serveur de données de suivi 13 du réseau postal 1, des premières archives de données de suivi datées DS associées à l'identifiant d'envoi « Id-tag Post Out » et également auprès du serveur de données de suivi 23 du réseau postal 2 (flèches 35) des secondes archives de données de suivi datées DS associées à l'identifiant d'envoi « Id-Tag Post In » et qui concernent le même envoi.

Ainsi, dans le serveur de données et d'images 30, un historique complet peut être établi des données de suivi datées DS pour l'envoi 3 sur l'ensemble de son cheminement dans les réseaux postaux 1 et 2 et le temps de parcours de cet envoi 3 dans les machines de tri 11 et 21 peut donc être déterminé de façon précise.

A noter que ce procédé de suivi peut être étendu à un ensemble d'envois 3, soit sur une période donnée correspondant à une campagne de mesures, soit de façon plus systématique à tout le courrier transitant d'un réseau postal 1 à un autre réseau postal 2.

On comprend que le procédé selon l'invention évite l'emploi de lettres test spécifiques qui ne permettent pas de réaliser des mesures précises et il peut être mis en oeuvre rapidement sur des réseaux postaux existants sans modification des systèmes d'identification d'envois dans les installations de tri.

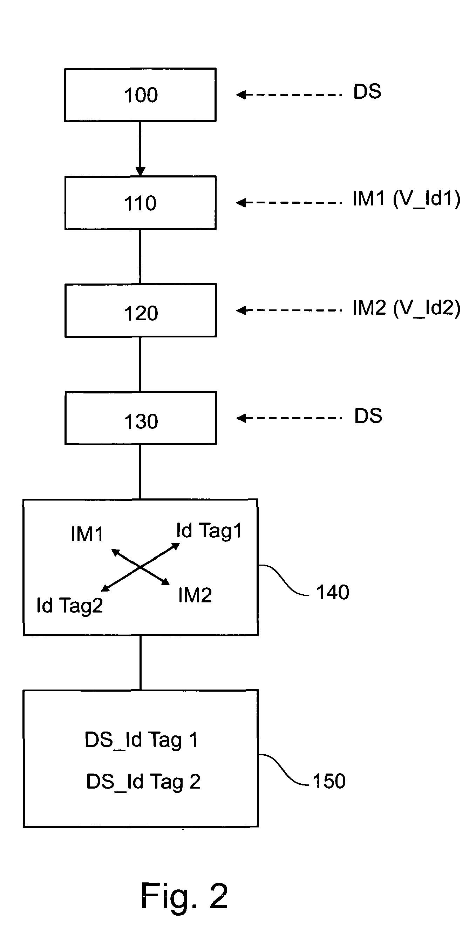

La mise en concordance des images IM1, IM2 d'un envoi 3 pour consolider des données de suivi datées DS associées à cet envoi 3 est illustrée sur la figure 2.

En 100, le serveur de données de suivi 13 reçoit une succession de données de suivi datées DS lesquelles contiennent chacune un premier identifiant unique d'envoi id-Tag1. Le serveur de données de suivi 13 peut recevoir et stocker des données de suivi datées DS pour un grand nombre d'envois 3 qui entrent dans le réseau 1.

En 110, le serveur de données et d'images 30 reçoit et enregistre une succession d'images numériques IM1 associées chacune à un identifiant d'envoi Id-Tag1 et qui correspondent à autant de différents envois 3 qui arrivent dans le centre d'échange 12.

En 120, le serveur de données et d'images 30 reçoit et enregistre une succession d'images numériques IM2 associées chacune à un identifiant unique d'envoi Id-Tag2 et qui correspondent à autant d'envois 3 différents qui arrivent dans le centre d'échange 22. Les identifiants Id-Tag2 sont dans le cas d'exemple générés avec un protocole différent des identifiants Id-Tag1.

En 130, le serveur de données de suivi 23 reçoit entre temps une succession de données de suivi datées DS lesquelles contiennent chacune un second identifiant unique d'envoi id-Tag2. Le serveur de données de suivi 23 peut aussi recevoir et stocker des données de suivi datées DS pour un grand nombre d'envois 3 qui entrent dans le réseau 2.

En 140, le serveur de données et d'images 30 en détectant une image IM2 provenant du serveur de données de suivi 23, balaie les images IM1 enregistrées en mémoire pour détecter une concordance graphique entre deux images IM1, IM2, afin d'établir une correspondance entre l'identifiant Id-Tag1 associé à l'image IM1 et l'identifiant Id-Tag2 associé à l'image IM2. Ce balayage des images IM1 peut être fait à chaque détection d'une nouvelle image IM2 ou encore de façon cyclique ou à la demande selon le cas sans sortir de l'invention.

Pour détecter une concordance graphique entre une image IM1 et une image IM2 du même envoi 3, on peut exploiter des signatures d'image, c'est-à-dire qu'on dérive des deux images IM1, IM2 d'un même envoi 3 respectivement une première et une seconde signature d'image V-Id1, V-Id2, chaque signature d'image V-Id1, V-Id2, comprenant une composante représentative de caractéristiques physiques de l'image IM1, IM2 et une seconde composante qui est une description textuelle du bloc d'adresse de destinataire, et on compare les composantes de la première signature d'image V-Id1 avec les composantes de la seconde signature d'image V-Id2, pour détecter une concordance graphique entre les deux images IM1, IM2 de l'envoi 3.

De telles signatures d'images V-Id1, V-Id2, peuvent aussi être produites par les serveurs de données de suivi 13 et 23 ou encore les machines de tri 11, 21 et être transmises au serveur de données et d'images 30 comme illustré sur la figure 2 à la place des images IM1, IM2 des envois 3 sans sortir du cadre de l'invention.

A partir de la mise en correspondance des identifiants d'envoi Id-Tag1 et Id-Tag2, le serveur de données et d'images 30 peut consolider en 150 sur la figure 2 les données de suivi datées DS associés à l'identifiant d'envoi Id-Tag1 avec les données de suivi datées DS associés avec l'identifiant d'envoi Id-Tag2 pour construire un historique complet du parcours d'un envoi 3 dans les deux réseaux postaux 1 et 2.

On comprend que le suivi du courrier réel selon le procédé de l'invention implique une grande quantité d'images IM1, IM2 à stocker et à balayer dans le serveur de données et d'images 30. Pour accélérer la mise en correspondance des images IM1, IM2 produites par le réseau postal 1 et celles produites par le réseau postal 2, on peut prévoir dans le serveur de données et d'images 30 un partitionnement des images IM1 selon un critère géographique de livraison des envois 3, par exemple selon le pays de l'adresse de livraison de chaque envoi 3 ce qui fait que le serveur de données et d'images 30, sur réception d'une image IM2 produite par une Poste nationale, peut limiter son balayage d'images IM1, IM2 pour la détection d'une concordance aux seules images IM1, IM2 associées au pays correspondant à celui de cette Poste nationale.

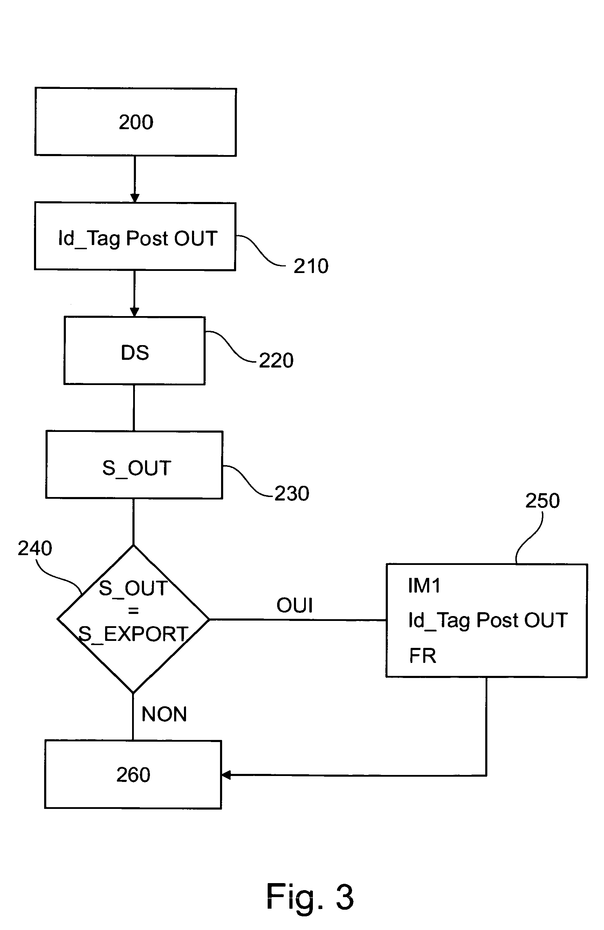

Sur la figure 3, on a illustré de façon schématique le processus de tri des envois 3 avec déclenchement de la transmission d'image IM1. En particulier, un envoi 3 est dépilé en 200 dans la dernière machine de tri 11. Cet envoi 3 est déjà muni d'un code d'identification unique d'envoi Id-TagPostOut généré selon le protocole du réseau de la Poste 1, lequel code d'identification unique d'envoi Id-TagPostOut est stocké dans une base de données en correspondance avec les données de tri de l'envoi 3. Dans la machine de tri 11, le code d'identification unique d'envoi Id-TagPostOut de cet envoi 3 est donc reconnu automatiquement en 210, par exemple par un lecteur de code barres, et les données de tri de cet envoi 3 sont récupérées automatiquement dans la base de données par la machine de tri 11. A ce stade du processus de tri, une donnée de suivi datée DS est envoyée au serveur de données de suivi 23 dans l'étape 220. Les données de tri sont croisées avec le plan de tri dans la machine de tri 11 pour déterminer en 230 la sortie de tri S-OUT de la machine de tri 11 vers laquelle l'envoi 3 doit être dirigé. Selon l'invention, on associe dans le plan de tri aux sorties de tri destinées à recevoir « du courrier export », c'est-à-dire du courrier en dernière passe de tri destiné à passer dans un bureau d'échange de sortie tel que 12, un donnée S-EXPORT signalant que cette sortie de tri est une sortie pour « du courrier export en dernière passe de tri». Suite à l'étape 230, dans le processus de tri on détecte en 240 si la sortie de tri déterminée en 210 pour un envoi 3 courant est une sortie de tri pour « du courrier export en dernière passe de tri» et dans ce cas, l'image IM1 de l'envoi 3 courant est transmise en 250 au serveur de données et d'images 30 en association avec le code d'identification unique d'envoi Id-TagPostOut associé à l'envoi 3 courant et aussi une information de partitionnement géographique, par exemple FR comme indiqué sur la figure 3. Ensuite le processus se poursuit par le tri en 260 de l'envoi 3 courant dans la sortie de tri S-OUT. Dans la négative à l'étape 240, aucune image IM1 n'est envoyée au serveur de données et d'images 30 et donc le processus se poursuit à l'étape 260.

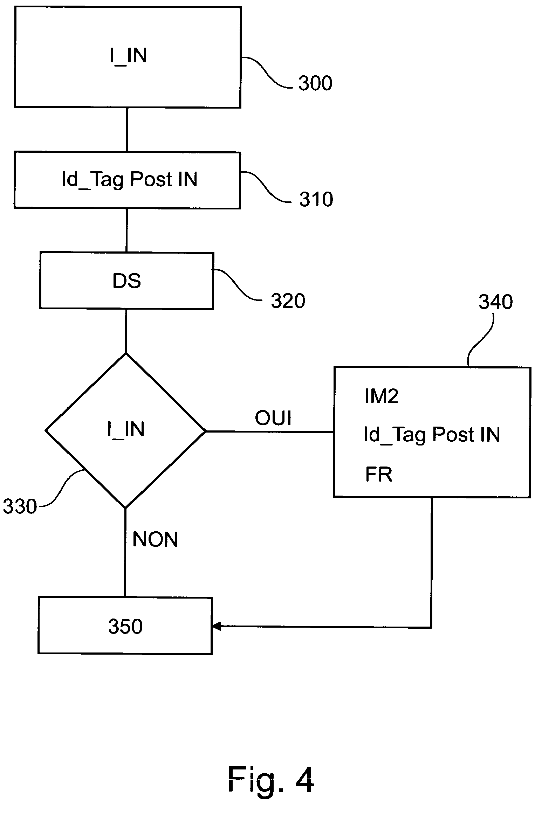

Sur la figure 4, on a maintenant illustré de façon schématique le processus de tri des envois 3 avec déclenchement de la transmission d'image IM2. L'envoi 3 est dépilé dans la machine de tri 21 et à l'étape 300. Le code d'identification unique d'envoi ID-TagPostOut de l'envoi 3 n'est normalement pas reconnaissable par la machine de tri 21. Suite à quoi, en 310 une image IM2 numérique de l'envoi 3 est formée dans la machine de tri 21 par une caméra, un identifiant unique d'envoi Id-TagPostIn est généré et un processus de reconnaissance d'adresse postale par OCR est appliqué sur l'image IM2 pour reconnaître l'adresse de livraison sur l'envoi 3 et produire des données de tri qui sont associées dans une base de données à l'identifiant Id-TagPostln. Les données de tri sont croisées avec le plan de tri dans la machine de tri 21 pour déterminer une sortie de tri correspondante où l'envoi 3 courant doit être trié. En 320, des données de suivi datées DS sont transmises au serveur de données de suivi 23 comme indiqué plus haut. Selon l'invention, dans la machine de tri 21 il est déterminé en 330 si cet envoi 3 courant est un «envoi import en première passe de tri» c'est-à-dire un envoi 3 provenant d'un bureau d'échange en entrée tel que 22. Selon l'invention, les envois 3 provenant du bureau d'échange 22 sont identifiés en amont du dépilage en 300 comme étant des « envois import en première passe de tri » par une entrée d'un paramètre de commande machine, par exemple à l'aide d'un intercalaire codifié reconnaissable par la machine de tri 21. Plus particulièrement, des envois3 provenant du bureau d'échange 22 sont rassemblés en pile et chargés dans le magasin de la machine de tri 21. Cette pile d'envois3 est précédée par un intercalaire dépilable destiné à signaler une pile « d'envois import en première passe de tri ». Le signalement peut être réalisé par un code barres I-IN apposé sur l'intercalaire qui est lu à l'étape 300.

Maintenant en 330 lors du passage d'un envoi 3 courant, si le code barre I-IN a déjà été détecté en amont par la machine de tri 21, l'image IM2 de l'envoi 3 courant est transmise en 340 avec le code d'identification unique d'envoi Id-TagPostln associé à l'envoi 3 courant et associé également à un identifiant de réseau récepteur, ici la Poste 2, par exemple « FR ». Cet identifiant est supposé connu dans la machine de tri 21, par exemple dans les paramètres de configuration de celle-ci.

Le processus se poursuit ensuite à l'étape 350 de tri de l'envoi 3 courant dans la sortie de tri correspondante à l'adresse de livraison. Dans la négative à l'étape 330, le processus se poursuit à l'étape 350.

Le signalement en 300 peut aussi être réalisé par une entrée d'un paramètre machine spécifique par l'opérateur de la machine de tri 21 comme cela est connu.

## Revendications

1. Procédé pour suivre du courrier dans un système de tri postal comprenant un premier réseau (1) de machines de tri (11) avec un premier protocole d'identification unique des envois (3) en machine et un second réseau (2) de machines de tri (21) avec un second protocole d'identification unique des envois (3) en machine, procédé dans lequel le premier réseau (1) produit des premières données de suivi datées (DS) au fur et à mesure qu'un certain envoi (3) est acheminé à travers les machines de tri (11) du premier réseau (1), ces premières données datées étant associées à un premier identifiant unique d'envoi (Id-TagPostOut) généré selon le premier protocole, le second réseau (2) produit des secondes données de suivi datées (DS) au fur et à mesure que ledit certain envoi (3) est acheminé à travers les machines de tri (21) du second réseau (2), ces secondes données datées (DS) étant associées à un second identifiant unique d'envoi (Id-TagPostln) généré selon le second protocole, **caractérisé en ce qu'**on récupère dans une unité de traitement de données (30) lesdites données datées (DS) associées auxdits premier et second identifiants uniques d'envoi (Id-TagPostOut, Id-TagPostln) aux fins de mesurer une caractéristique temporelle du parcours dudit certain envoi (3) dans les premier et second réseaux (1, 2) du système de tri postal, et **en ce que** l'on établit dans l'unité de traitement de données (30) une correspondance entre lesdits premier et second identifiants uniques d'envoi (Id-TagPostOut, Id-TagPostln) par l'intermédiaire d'images numériques dudit certain envoi (3).

2. Procédé selon la revendication 1, dans lequel, dans l'unité de traitement de données (30), on récupère du premier réseau (1) une première image (IM1) de l'envoi (3) associée au premier identifiant unique d'envoi (Id-TagPostOut), on récupère du second réseau (2) une seconde image (IM2) de cet envoi (3) associée au second identifiant unique d'envoi (Id-TagPostIn), on détecte (140) que la première image (IM1) concorde graphiquement avec la seconde image (IM2) pour établir ladite correspondance entre lesdits premier et second identifiants uniques d'envoi (Id-TagPostOut, Id-TagPostln) et à partir de cette mise en correspondance on consolide (150) en mémoire lesdites premières données de suivi datées (DS) qui sont produites par le premier réseau (1) avec les secondes données de suivi datées (DS) qui sont produites par le second réseau (2).

3. Procédé selon la revendication 2, dans lequel ladite première image (IM1) associée audit certain envoi (3) est récupérée lors de la dernière passe de tri dudit envoi (3) dans le premier réseau (1) et ladite seconde image (IM2) associée audit certain envoi (3) est récupérée lors de la première passe de tri dudit certain envoi (3) dans le second réseau (2).

4. Procédé selon l'une des revendications 1 à 3, dans lequel on dérive des deux images (IM1, IM2) de l'envoi (3) respectivement une première (V-Id1) et une seconde signature d'image (V-Id2), chaque signature d'image (V-Id1, V-Id2) comprenant une composante représentative de caractéristiques physiques de l'image (IM1, IM2) et une seconde composante qui est une description textuelle du bloc d'adresse de destinataire, et dans lequel on compare les composantes de la première signature d'image (V-Id1) avec les composantes de la seconde signature d'image (V-Id2) pour détecter une concordance graphique entre les deux images (IM1, IM2) de l'envoi (3).

5. Procédé selon l'une des revendications 1 à 4, dans lequel chaque image (IM1, IM2) dudit certain envoi (3) est récupérée associée avec un identifiant de réseau récepteur de l'envoi (3).

6. Procédé selon la revendication 5, dans lequel l'identifiant de réseau récepteur est associé dans un plan de tri à une sortie de tri d'une machine de tri (11) du premier réseau (1).

## Patentansprüche

1. Verfahren zur Sendungsverfolgung in einem postalischen Sortiernetzwerk, umfassend ein erstes Netz (1) von Sortiermaschinen (11) mit einem ersten Protokoll zur eindeutigen Identifikation der Sendungen (3) in der Maschine und ein zweites Netz (2) von Sortiermaschinen (21) mit einem zweiten Protokoll zur eindeutigen Identifikation der Sendungen (3) in der Maschine, wobei bei dem Verfahren das erste Netz (1) erste datierte Verfolgungsdaten (DS) im Zuge dessen, dass eine bestimmte Sendung (3) durch die Sortiermaschinen (11) des ersten Netzes (1) befördert wird, erzeugt, wobei diese ersten datierten Daten mit einem ersten eindeutigen Sendungsidentifikator (Id-TagPostOut), der nach dem ersten Protokoll erzeugt wird, verbunden sind, wobei das zweite Netz (2) zweite datierte Verfolgungsdaten (DS) im Zuge dessen, dass die bestimmte Sendung (3) durch die Sortiermaschinen (21) des zweiten Netzes (2) befördert wird, erzeugt, wobei diese zweiten datierten Daten (DS) mit einem zweiten eindeutigen Sendungsidentifikator (Id-TagPostIn), der nach dem zweiten Protokoll erzeugt wird, verbunden sind, **dadurch gekennzeichnet, dass** in einer Datenverarbeitungseinheit (30) die datierten Daten (DS), die mit den ersten und zweiten eindeutigen Sendungsidentifikatoren (Id-TagPostOut, Id-TagPostIn) verbunden sind, wieder verwendet werden, um ein zeitliches Merkmal der Wegstrecke der bestimmten Sendung (3) in den ersten und zweiten Netzen (1, 2) des postalischen Sortiernetzwerks zu messen, und dass in der Datenverarbeitungseinheit (30) eine Korrespondenz zwischen den ersten und zweiten eindeutigen Sendungsidentifikatoren (Id-TagPostOut, Id-TagPostIn) mit Hilfe von digitalen Bildern der bestimmten Sendung (3) erstellt wird.

2. Verfahren nach Anspruch 1, bei dem in der Datenverarbeitungseinheit (30) aus dem ersten Netz (1) ein erstes Bild (IM1) der Sendung (3), das mit dem ersten eindeutigen Sendungsidentifikator (Id-TagPostOut) verbunden ist, gewonnen wird, aus dem zweiten Netz (2) ein zweites Bild (IM2) dieser Sendung (3), das mit dem zweiten eindeutigen Sendungsidentifikator (Id-TagPostIn) verbunden ist, gewonnen wird, und wobei detektiert wird (140), ob das erste Bild (IM1) grafisch mit dem zweiten Bild (IM2) übereinstimmt, um die Korrespondenz zwischen den ersten und zweiten eindeutigen Sendungsidentifikatoren (Id-TagPostOut, Id-TagPostIn) zu erstellen, und dass anhand dieser Erstellung einer Korrespondenz die ersten datierten Verfolgungsdaten (DS), die von dem ersten Netz (1) erzeugt werden, mit den zweiten datierten Verfolgungsdaten (DS), die von dem zweiten Netz (2) erzeugt werden, im Speicher konsolidiert werden (150).

3. Verfahren nach Anspruch 2, bei dem das erste Bild (IM1), das mit der bestimmten Sendung (3) verbunden ist, beim letzten Sortierdurchgang der Sendung (3) in dem ersten Netz (1) gewonnen wird, und das zweite Bild (IM2), das mit der bestimmten Sendung (3) verbunden ist, beim ersten Sortierdurchgang der bestimmten Sendung (3) in dem zweiten Netz (2) gewonnen wird.

4. Verfahren nach einem der Ansprüche 1 bis 3, bei dem von den zwei Bildern (IM1, IM2) der Sendung (3) jeweils eine erste (V-Id1) und eine zweite (V-Id2) Bildsignatur abgeleitet werden, wobei jede Bildsignatur (V-Id1, V-Id2) eine Komponente umfasst, die für physische Merkmale des Bildes (IM1, IM2) repräsentativ ist, und eine zweite Komponente umfasst, die eine Textbeschreibung des Empfängeradressblocks ist, und bei dem die Komponenten der ersten Bildsignatur (V-Id1) mit den Komponenten der zweiten Bildsignatur (V-Id2) verglichen werden, um eine grafische Übereinstimmung zwischen den beiden Bildern (IM1, IM2) der Sendung (3) zu erfassen.

5. Verfahren nach einem der Ansprüche 1 bis 4, bei dem jedes Bild (IM1, IM2) der bestimmten Sendung (3) in Verbindung mit einem Empfängernetzidentifikator der Sendung (3) gewonnen wird.

6. Verfahren nach Anspruch 5, bei dem der Empfängernetzidentifikator in einer Sortierebene mit einem Sortierausgang einer Sortiermaschine (11) des ersten Netzes (1) verbunden ist.

## Claims

1. A method of tracking mail in a postal sorting system comprising a first network (1) of sorting machines (11) with a first unique identification protocol for uniquely identifying the mailpieces (3) in the machines, and a second network (2) of sorting machines (21) with a second unique identification protocol for uniquely identifying the mailpieces (3) in the machines, in which method the first network (1) produces first dated tracking data (DS) as a certain mailpiece (3) is passing through the sorting machines (11) of the first network (1), this first dated data being associated with a first unique mailpiece identifier (Id_Tag Post OUT) generated using the first protocol, and the second network (2) produces second dated tracking data (DS) as said certain mailpiece (3) is passing through the sorting machines (21) of the second network (2), this second dated data (DS) being associated with a second unique mailpiece identifier (Id_Tag Post IN) generated using the second protocol, said method being **characterized in that**, in a data-processing unit (30), said dated data (DS) associated with said first and second unique mailpiece identifiers (Id_Tag Post OUT, Id_Tag Post IN) is retrieved for the purposes of measuring a time characteristic of the journey of said certain mailpiece (3) through the first and second networks (1, 2) of the postal sorting system, and **in that**, in the data-processing unit (30), a match is established between said first and second unique mailpiece identifiers (Id_Tag Post OUT, Id_Tag Post IN)via digital images of said certain mailpiece (3).

2. A method according to claim 1, wherein, in the data processing unit (30), a first image (IM1) of the mailpiece (3), which image is associated with the first unique mailpiece identifier (Id_Tag Post OUT), is retrieved from the first network (1), a second image (IM2) of said mailpiece (3), which image is associated with the second unique mailpiece identifier (Id_Tag Post IN), is retrieved from the second network (2), it is detected (140) whether the first image (IM1) graphically matches the second image (IM2) so as to establish said match between said first and second unique mailpiece identifiers (Id_Tag Post OUT, Id_Tag Post IN), and, on the basis of this matching, said first dated tracking data (DS) produced by the first network (1) is consolidated (150) in a memory with the second dated tracking data (DS) produced by the second network (2).

3. A method according to claim 2, wherein said first image (IM1) associated with said certain mailpiece (3) is retrieved during the last sorting pass of said mailpiece (3) through the first network (1), and said second image (IM2) associated with said certain mailpiece (3) is retrieved during the first sorting pass of said certain mailpiece (3) through the second network (2).

4. A method according to any one of claims 1 to 3, wherein a first image signature (V-Id1) and a second image signature (V-Id2) are derived respectively from the two images (IM1, IM2) of the mailpiece (3), each image signature (V-Id1, V-Id2) comprising a component representative of physical characteristics of the image (IM1, IM2) and a second component that is a textual description of the recipient address block, and wherein the components of the first image signature (V-Id1) are compared with the components of the second image signature (V-Id2) in order to detect a graphical match between the two images (IM1, IM2) of the mailpiece (3).

5. A method according to any one of claims 1 to 4, wherein each image (IM1, IM2) of said certain mailpiece (3) is retrieved associated with a receiver network identifier for identifying the network receiving the mailpiece (3).

6. A method according to claim 5, wherein the receiver network identifier is associated in a sorting plan with a sorting outlet of a sorting machine (11) of the first network (1).
